# FASCICULE DE BREVET EUROPEEN

(11) **EP 0 813 275 B1**
(45) Date de publication et mention de la délivrance du brevet: **21.11.2001**
(21) Numéro de dépôt: 97401308.8
(22) Date de dépôt: 10.06.1997
(51) Int. Cl.: H02G 1/12

(54) **Organe de fixation pour lame de coupe sur une pince à dénuder**
Befestigungsorgan für ein Schneideblatt einer Abisolierzange
Fixing member for the cutting blade of a stripping plier

(30) Priorité: 11.06.1996 FR 9607225
(43) Date de publication de la demande: 17.12.1997
(73) Titulaire: Alroc Roux, 72160 Connerre (FR)
(72) Inventeur: Roux, Didier, 72160 Tuffe (FR)
(74) Mandataire: Dawidowicz, Armand

(56) Documents cités:
- FR-A- 2 614 950

## Description

La présente invention concerne un organe de fixation propre à permettre le montage et le démontage d'une lame de coupe qui lui est associée sur une pince à dénuder.

Le type de pince visé par la présente invention est utilisé pour l'enlèvement de la gaine extérieure de câbles électriques dans des réseaux. Il convient pour accroître la sécurité des utilisateurs, en particulier lors de travaux sous tension, de pouvoir proposer une isolation efficace de la pince tout en offrant également la possibilité de changer facilement de lames de coupe. Par ailleurs, il convient aussi de prévoir une fixation des lames de coupe prévenant toute utilisation de molettes standards non isolées.

Il convient donc de proposer un organe de fixation pour chaque lame de coupe d'une pince à dénuder de manière à permettre leur mise en place et leur enlèvement de manière aisée tout en garantissant une fixation parfaite desdites lames sur la pince ainsi qu'une parfaite isolation, en préservant la possibilité de pouvoir changer les pièces de manière simple.

A cet effet, l'invention a pour objet un organe de fixation pour une lame de coupe circulaire ou longitudinale sur une pince à dénuder, ladite lame de coupe se présentant sous forme d'un anneau plat circulaire, caractérisé en ce que ledit organe de fixation est constitué en un matériau isolant et comporte un élément mâle, fixé sur la pince à dénuder et recevant la lame de coupe, et un élément femelle coopérant avec ledit élément mâle, lesdits éléments mâle et femelle comportant des moyens permettant l'encliquetage et le désencliquetage de l'élément femelle sur ledit élément mâle, la lame de coupe étant maintenue entre lesdits éléments mâle et femelle de telle sorte que son arête tranchante est en saillie, hors dudit organe de fixation, dans le plan de jonction des deux éléments.

Ainsi, on obtient un organe de fixation qui permet une mise en place simple et sûre d'une lame de coupe sur une pince à dénuder mais qui permet en outre le changement de ladite lame de coupe tout en assurant également une parfaite isolation de celle-ci.

L'invention concerne également une pince à dénuder pourvue d'organes de fixation pour lames de coupe selon l'invention.

On décrira maintenant plus en détail un mode de réalisation préféré de l'invention en référence au dessin annexé dans lequel :
la figure 1 représente une vue en élévation latérale de l'élément mâle dudit organe de fixation selon l'invention ;
la figure 2 représente une vue de dessus dudit élément mâle selon la figure 1 ;

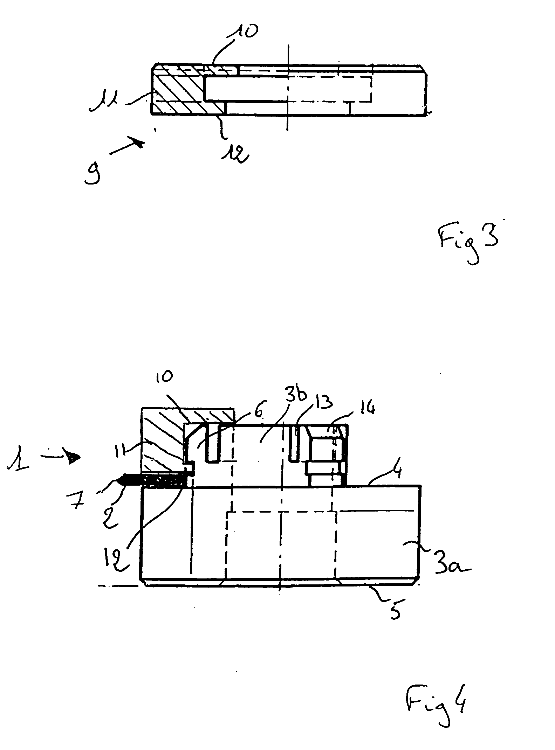

la figure 3 représente une vue en coupe longitudinale d'un élément femelle de l'organe de fixation selon l'invention ; et
la figure 4 représente une vue en coupe d'un organe de fixation selon l'invention sur lequel est monté une lame de coupe.

Selon une forme de réalisation préférée de l'invention, l'organe de fixation 1 d'une lame de coupe 2 comprend un élément mâle 3 ou galet constitué d'une première portion 3a, de préférence cylindrique et de section circulaire, présentant une face inférieure 5 servant à la fixation dudit élément mâle 3 sur la pince à dénuder et une autre face ou face supérieure 4 présentant, sensiblement au centre, une portion tubulaire en saillie formant douille 3b, de plus petit diamètre que la première portion.

La douille 3b est pourvue à sa périphérie d'au moins trois ailettes 6 en saillie radiale, régulièrement espacées. Lesdites ailettes 6 définissent un diamètre extérieur φ1 plus grand que le diamètre extérieur φ2 de la douille 3b.

La douille 3b de l'élément mâle 3 définit le moyen de réception de la lame de coupe 2 qui, étant sous forme d'un anneau plat, est glissée sur cette douille 3b et vient reposer contre la face supérieure 4 de la première portion 3a de l'élément mâle 3. Les dimensions dudit élément mâle 3 sont choisies telles que le diamètre extérieur φ3 de la première portion 3a est inférieur au diamètre extérieur de la lame de coupe 2, l'arête tranchante 7 de celle-ci étant alors en saillie hors de la face 4 de ladite première portion 3a.

Le diamètre extérieur φ1, défini par les ailettes 6 de la douille 3b, correspond, quant à lui, au plus, au diamètre intérieur de la lame de coupe 2 en forme d'anneau plat de telle sorte que ladite lame de coupe 2 est mise en place sur l'organe de fixation, ledit anneau pouvant être glissé autour de la douille 3b de l'élément mâle 3 et est maintenue correctement en place par les ailettes 6. De ce fait, la lame de coupe 2 est parfaitement positionnée dans l'organe de fixation.

Les ailettes 6 sont pourvues d'une rainure 8 à leur base à proximité de la face 4 de la portion 3a de l'élément mâle 3. On prévoit, de préférence, des fentes 13 de part et d'autre des ailettes 6 sur la douille 3b.

L'élément femelle 9 dudit organe de fixation 1 ou contre-galet se présente sensiblement sous la forme d'un capuchon 9 comportant un fond 10 et une jupe périphérique 11 définissant un diamètre intérieur correspondant sensiblement au diamètre extérieur φ1 défini par les ailettes 6 de l'élément mâle 3.

Le bord de la jupe périphérique 11 est pourvu d'un rebord 12 en saillie vers l'intérieur de l'élément femelle 9 de telle sorte que, lorsque ledit élément femelle 9 est engagé sur ledit élément mâle 3, le rebord 12 vient se loger à l'intérieur des rainures 8 prévues sur les ailettes 6 et permet ainsi l'encliquetage desdits éléments 3 et 9 l'un avec l'autre.

L'organe de fixation 1 est constitué en un matériau isolant. De préférence, ledit matériau isolant est un matériau à mémoire de rappel élastique. Ainsi, lors de l'encliquetage de l'élément femelle 9 sur l'élément mâle, il suffit d'imprimer une certaine poussée sur l'élément femelle 9 pour permettre son engagement sur ledit élément mâle 3. En effet, la souplesse du matériau utilisé permet de repousser le rebord 12 de la jupe périphérique 11 vers l'extérieur qui vient en butée contre les ailettes 6 lors de son engagement sur l'élément mâle 3 tandis que sa mémoire de rappel élastique contribue à maintenir l'encliquetage des deux éléments 3 et 9, ledit rebord 12 tendant à se maintenir dans les rainures 8 des ailettes 6.

L'élément mâle 3 peut être constituer également dans un matériau à mémoire élastique mais peut être en un autre matériau isolant non élastique, les fentes 13 prévues de part et d'autre des ailettes 6 conférant une certaine élasticité à la douille 3b de l'élément mâle 3.

Lorsqu'on met en place une lame de coupe 2 sur une pince à dénuder pourvu d'un organe de fixation 1 selon l'invention, on glisse la lame de coupe 2 autour de la douille 3b de l'élément mâle 3 et ladite lame de coupe 2 vient reposer sur la face supérieure 4 de la première portion dudit élément mâle 3, son arête tranchante 7 étant en saillie hors de la face supérieure 4 de ladite première portion 3a. le positionnement de la lame est obtenue par les ailettes 6.

On engage ensuite l'élément femelle 9 sur l'élément mâle 3, à force, afin de repousser le rebord 12 de la jupe périphérique 11 dudit élément femelle 9 et le rebord intérieur 12 venant ensuite se loger dans les rainures 8 prévues à cet effet sur les ailettes 6 réalise l'encliquetage desdits éléments mâle et femelle, la lame de coupe 2, avec son arête 7 en saillie, étant maintenue entre les éléments mâle et femelle dudit organe de fixation 1.

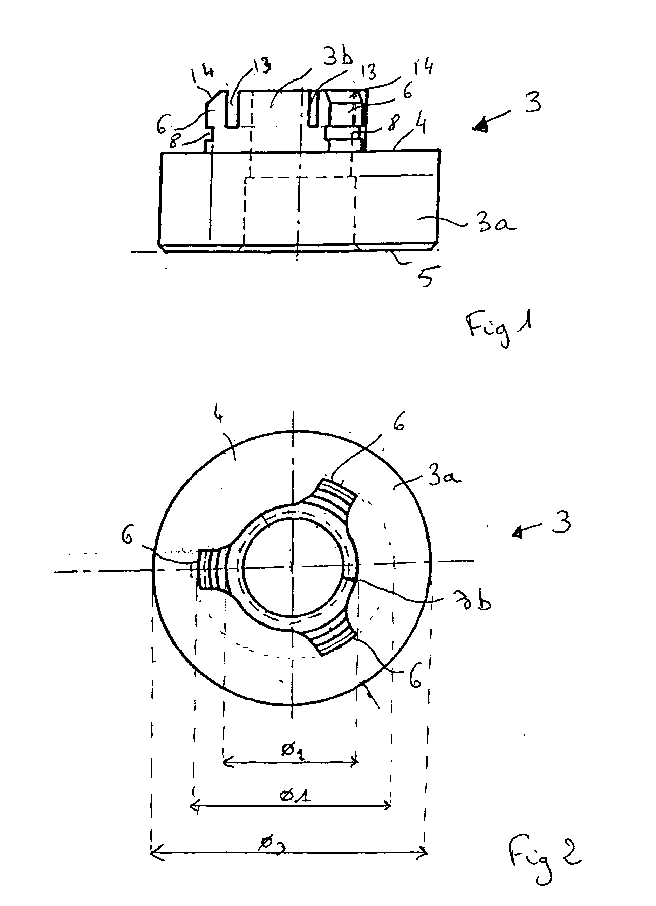

Afin de faciliter l'engagement de l'élément femelle 9 sur l'élément mâle, le bord supérieur 14 des ailettes 6 peut être biseauté comme on peut le voir à la figure 1.

Pour changer une lame de coupe usagée par exemple, il suffit d'exercer une traction sur l'élément femelle 9 pour le désencliqueter.

## Revendications

1. Organe de fixation (1) pour une lame de coupe (2) circulaire ou longitudinale sur une pince à dénuder, ladite lame de coupe (2) se présentant sous forme d'un anneau plat circulaire,
**caractérisé en ce que** ledit organe de fixation (1) est constitué en un matériau isolant et comporte un élément mâle (3), fixé sur la pince à dénuder et recevant la lame de coupe (2), et un élément femelle (9) coopérant avec ledit élément mâle (3), lesdits éléments mâle et femelle comportant des moyens permettant l'encliquetage et le désencliquetage de l'élément femelle (9) sur ledit élément mâle (3), la lame de coupe (2) étant maintenue entre lesdits éléments mâle (3) et femelle (9) de telle sorte que son arête tranchante (7) est en saillie, hors dudit organe de fixation (1), dans le plan de jonction des deux éléments (3, 9).

2. Organe de fixation selon la revendication 1,
**caractérisé en ce que** ledit élément mâle (3) est constitué d'une première portion (3a), de préférence cylindrique et de section circulaire, présentant une première face ou face inférieure (5) servant à la fixation dudit élément mâle (3) sur la pince à dénuder et une autre face ou face supérieure (4) portant une seconde portion en saillie dudit élément mâle (3), ladite face (4) présentant, sensiblement au centre, une douille (3b) en saillie, de plus petit diamètre que le diamètre extérieur de la première portion (3a) et pourvue sur sa périphérie d'au moins trois ailettes (6) en saillie radiale, régulièrement espacées.

3. Organe de fixation selon la revendication 2,
**caractérisé en ce que** les ailettes (6) de la douille (3b) sont pourvues d'une rainure (8) parallèlement à leur base à proximité de la face 4 de l'élément mâle (3).

4. Organe de fixation selon l'une des revendications 1 à 3,
**caractérisé en ce que** des fentes (13) sont prévues de part et d'autre des ailettes (6) sur la douille (3b).

5. Organe de fixation selon l'une des revendications 1 à 4,
**caractérisé en ce que** le bord supérieur (14) des ailettes (6) est biseauté.

6. Organe de fixation selon l'une des revendications 1 à 4,
**caractérisé en ce que** l'élément mâle est constitué d'un matériau isolant à mémoire de rappel élastique.

7. Organe de fixation selon l'une des revendications 1 à 6,
**caractérisé en ce que** l'élément femelle (9) se présente sensiblement sous la forme d'un capuchon comportant un fond (10) et une jupe périphérique (11) définissant un diamètre intérieur correspondant sensiblement au diamètre extérieur φ1 défini par les ailettes (6) de l'élément mâle (3), l'extrémité de la jupe périphérique (11) étant pourvue d'un rebord (12) en saillie vers l'intérieur de l'élément femelle (9).

8. Organe de fixation selon la revendication 7,
**caractérisé en ce que** l'élément femelle (9) est constitué d'un matériau isolant à mémoire de rappel élastique.

## Claims

1. A fixing member (1) for a circular or longitudinal cutting blade (2) on wire strippers, the said cutting blade (2) being in the form of a circular flat ring,
**characterised in that** the said fixing member (1) is made of an insulating material and comprises a male element (3), fixed on the wire strippers and receiving the cutting blade (2), and a female element (9) interacting with the said male element (3), the said male and female elements having means allowing locking and unlocking of the female element (9) on the said male element (3), the cutting blade (2) being held between the said male (3) and female (9) elements in such a way that its cutting edge (7) protrudes, beyond the said fixing member (1), in the joining plane of the two elements (3, 9).

2. A fixing member according to Claim 1,
**characterised in that** the said male element (3) consists of a first portion (3a), which is preferably cylindrical and of circular cross-section, having a first face or lower face (5) serving for fixing the said male element (3) on the wire strippers and another face or upper face (4) bearing a second projecting portion of the said male element (3), the said face (4) having, essentially in the centre, a projecting bush (3b) of a diameter smaller than the external diameter of the first portion (3a) and provided on its periphery with at least three regularly spaced, radially projecting fins (6).

3. A fixing member according to Claim 2,
**characterised in that** the fins (6) of the bush (3b) are provided with a groove (8) parallel to their base close to the face 4 of the male element (3).

4. A fixing member according to one of Claims 1 to 3,
**characterised in that** slots (13) are provided on either side of the fins (6) on the bush (3b).

5. A fixing member according to one of Claims 1 to 4,
**characterised in that** the upper edge (14) of the fins (6) is bevelled.

6. A fixing member according to one of Claims 1 to 4,
**characterised in that** the male element is made of an insulating material with elastic recall memory.

7. A fixing member according to one of Claims 1 to 6,
**characterised in that** the female element (9) is essentially in the form of a cap having a base (10) and a peripheral skirt (11) defining an internal diameter essentially corresponding to the external diameter φ1 defined by the fins (6) of the male element (3), the end of the peripheral skirt (11) being provided with a shoulder (12) projecting towards the interior of the female element (9).

8. A fixing member according to Claim 7,
**characterised in that** the female element (9) is made of an insulating material with elastic recall memory.

## Patentansprüche

1. Befestigungsorgan (1) für eine kreisförmige oder längliche Schneidklinge (2) an einer Abisolierzange, wobei die besagte Schneidklinge (2) in Form eines kreisförmigen flachen Rings ausgeführt ist,
**dadurch gekennzeichnet, daß** das besagte Befestigungsorgan (1) aus einem Isoliermaterial besteht und ein Steckelement (3), das an der Abisolierzange befestigt ist und die Schneidklinge (2) aufnimmt, und ein Aufnahmeelement (9) umfaßt, das mit dem besagten Steckelement (3) zusammenwirkt, wobei die besagten Steck- und Aufnahmeelemente Mittel umfassen, die das Einrasten und das Ausrasten des Aufnahmeelements (9) an dem besagten Steckelement (3) ermöglichen, wobei die Schneidklinge (2) zwischen den besagten Steck- (3) und Aufnahmeelementen (9) so gehalten wird, daß ihre Schneidkante (7) über das besagte Befestigungsorgan (1) hinaus in der Verbindungsebene der beiden Elemente (3, 9) vorsteht.

2. Befestigungsorgan nach Anspruch 1, **dadurch gekennzeichnet, daß** das besagte Steckelement (3) aus einem ersten, vorzugsweise zylindrischen und mit kreisförmigem Querschnitt ausgeführten Abschnitt (3a) besteht, der eine erste Fläche oder Unterseite (5), die zur Befestigung des besagten Steckelements (3) an der Abisolierzange dient, und eine andere Fläche oder Oberseite (4) aufweist, die einen vorstehenden zweiten Abschnitt des besagten Steckelements (3) trägt, wobei die besagte Fläche (4) in etwa in der Mitte eine vorstehende Hülse (3b) mit kleinerem Durchmesser als der erste Abschnitt (3a) aufweist, die an ihrem Umfang mit wenigstens drei radial vorstehenden, gleichmäßig beabstandeten Flügeln (6) versehen ist.

3. Befestigungsorgan nach Anspruch 2, **dadurch gekennzeichnet, daß** die Flügel (6) der Hülse (3b) mit einer Nut (8) parallel zur ihrer Basis in der Nähe der Fläche (4) des Steckelements (3) versehen sind.

4. Befestigungsorgan nach einem der Ansprüche 1 bis 3, **dadurch gekennzeichnet, daß** Schlitze (13) beiderseits der Flügel (6) an der Hülse (3b) vorgesehen sind.

5. Befestigungsorgan nach einem der Ansprüche 1 bis 4, **dadurch gekennzeichnet , daß** der obere Rand (14) der Flügel (6) abgeschrägt ist.

6. Befestigungsorgan nach einem der Ansprüche 1 bis 4, **dadurch gekennzeichnet, daß** das Steckelement aus einem elastischen Formgedächtnis-Isoliermaterial besteht.

7. Befestigungsorgan nach einem der Ansprüche 1 bis 6, **dadurch gekennzeichnet, daß** das Aufnahmeelement (9) in etwa in Form einer Kappe mit einem Boden (10) und einer Umfangseinfassung (11) ausgeführt ist, die einen Innendurchmesser definiert, der in etwa dem durch die Flügel (6) des Steckelements (3) definierten Außendurchmesser (φ1) entspricht, wobei das Ende der Umfangseinfassung (11) mit einer zum Innern des Aufnahmeelements (9) vorstehenden Randleiste (12) versehen ist.

8. Befestigungsorgan nach Anspruch 7,
**dadurch gekennzeichnet, daß** das Aufnahmeelement (9) aus einem elastischen Formgedächtnis-Isoliermaterial besteht.
